(19) Europäisches Patentamt
European Patent Office
Office européen des brevets

(11) **EP 4 576 298 A1**

(12) **EUROPEAN PATENT APPLICATION**
published in accordance with Art. 153(4) EPC

(43) Date of publication:
**25.06.2025 Bulletin 2025/26**

(21) Application number: 22956805.0

(22) Date of filing: **30.08.2022**

(51) International Patent Classification (IPC):
*H01M 10/052* (2010.01)     *H01M 10/058* (2010.01)

(52) Cooperative Patent Classification (CPC):
**H01M 10/052; H01M 10/058;** Y02E 60/10;
Y02P 70/50

(86) International application number:
**PCT/CN2022/115878**

(87) International publication number:
**WO 2024/044973 (07.03.2024 Gazette 2024/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventor: **CHEN, Tengteng
Ningde, Fujian 352100 (CN)**

(74) Representative: **Icosa
83 avenue Denfert-Rochereau
75014 Paris (FR)**

(54)   **ELECTROCHEMICAL DEVICE AND ELECTRIC APPARATUS**

(57)    This application provides an electrochemical device and an electric device. The electrochemical device includes a housing and a wound electrode assembly; where the electrode assembly is accommodated in the housing, the electrode assembly has a winding centerline, the electrode assembly includes a positive electrode plate and a negative electrode plate, and along a winding direction of the positive electrode plate, a positive electrode active material layer of the positive electrode plate has a positive electrode winding starting end and a positive electrode winding ending end. A straight line passing through the positive electrode winding ending end and orthogonal to the winding centerline is defined as a first reference line, a straight line orthogonal to the first reference line and orthogonal to the winding centerline is defined as a second reference line, and a straight line passing through the positive electrode winding starting end and orthogonal to the winding centerline is defined as a third reference line, where a zero or acute angle $\alpha$ exists between the third reference line and the second reference line, satisfying $0°\leq\alpha\leq30°$, which can inhibit the collapse of the electrode plate in an inner winding circle caused by the swelling of the electrode assembly, thereby improving the service life of the electrochemical device.

FIG. 2

EP 4 576 298 A1

## Description

### TECHNICAL FIELD

This application relates to the technical field of batteries, and specifically, to an electrochemical device and an electric device.

### BACKGROUND

With the rapid development of fields such as portable electronic devices, electric transportation tools, electric tools, drones, and energy storage devices, there are increasingly higher demands on the service life of the batteries used in these applications.

### SUMMARY

This application provides an electrochemical device and an electric device to improve the service life of the electrochemical device.

According to a first aspect, this application provides an electrochemical device, including a housing and a wound electrode assembly; where an accommodating space is formed inside the housing; and the wound electrode assembly accommodated in the accommodating space, where the wound electrode assembly has a winding centerline, the wound electrode assembly includes a positive electrode plate and a negative electrode plate, the positive electrode plate includes a positive electrode active material layer, and along a winding direction of the positive electrode plate, the positive electrode active material layer has a positive electrode winding starting end and a positive electrode winding ending end; where when observed along a direction of the winding centerline, a straight line passing through the positive electrode winding ending end and orthogonal to the winding centerline is defined as a first reference line, a straight line orthogonal to the first reference line and orthogonal to the winding centerline is defined as a second reference line, and a straight line passing through the positive electrode winding starting end and orthogonal to the winding centerline is defined as a third reference line, where a zero or acute angle $\alpha$ exists between the third reference line and the second reference line, satisfying $0° \leq \alpha \leq 30°$.

The inventor of this application has found through research that during the charge of an electrochemical device, an electrode plate undergoes volume expansion. Due to a smaller curvature of an inner winding circle, the required radius change for the inner winding circle is larger to reach a same volume expansion. However, the radius change of the inner winding circle is restricted, forming inward radial pressure, which over time easily leads to the collapse of the electrode plate in the inner winding circle, affecting the service life of the electrochemical device. Due to the wound electrode assembly has a spiral involute structure, its diameter at the first reference line is the largest, and the inward radial pressure is also the greatest. With the progression of cycling, the electrode assembly tends to deform along a direction of the second reference line, forming an ellipse. In this application, the angle between the third reference line and the second reference line is set as a zero or acute angle $\alpha$, satisfying $0° \leq \alpha \leq 30°$. As a result, the positive electrode winding starting end of the positive electrode active material layer is disposed close to the second reference line. On one hand, since the second reference line is near a major axis of the ellipse, and endpoints of the major axis of the ellipse have a smaller curvature, being able to withstand greater pressure, the collapse failure of the electrode plate winding starting end is inhibited. On the other hand, the positive electrode winding starting end being near the major axis endpoints of the ellipse can provide good arch support, allowing the electrode plate in an inner winding circle to withstand greater radial pressure along the first reference line, thereby inhibiting the collapse of the electrode plate in the inner winding circle. This reduces the risk of electrochemical device failure due to the collapse of the electrode plate in the inner winding circle, thereby improving the service life of the electrochemical device.

In some implementations, $0° \leq \alpha \leq 25°$. At this time, the positive electrode winding starting end of the positive electrode active material layer is disposed closer to the second reference line. On one hand, this can better inhibit the collapse failure of the electrode plate winding starting end, and on the other hand, this can better support the electrode plate in an inner winding circle, further inhibiting the collapse of the electrode plate in the inner winding circle, thereby improving the service life of the electrochemical device. Further, in some embodiments, $0° \leq \alpha \leq 10°$.

In some embodiments, the wound electrode assembly has a winding central hole, a radius of the winding central hole is r, and a radius of the wound electrode assembly is R, satisfying $r \geq 0.15R$. At this time, when an inner winding circle is subjected to radial pressure, it can have enough buffer space, further inhibiting the collapse of the electrode plate in the inner winding circle.

In some embodiments, $r \geq 0.3R$. At this time, the buffer space for the inner winding circle when subjected to radial pressure is larger, thereby further reducing the risk of collapse of the electrode plate in the inner winding circle.

In some embodiments, $r \leq 0.5R$. This can prevent the energy density of the electrochemical device from being too low due to an excessively large radius of the winding central hole.

In some embodiments, r≥1mm. At this time, the winding central hole has enough space so that the risk of collapse of the electrode plate in the inner winding circle is low. This is conducive to sufficient infiltration of the electrolyte into the wound electrode assembly, thereby helping to fully utilize the capacity of the electrochemical device.

In some embodiments, the negative electrode plate includes a negative electrode active material layer, the negative electrode active material layer has a negative electrode winding ending end and a negative electrode winding starting end, where along a winding direction of the wound electrode assembly, the negative electrode winding ending end extends beyond the positive electrode winding ending end.

In some embodiments, along a direction opposite the winding direction of the wound electrode assembly, the negative electrode winding starting end extends beyond the positive electrode winding starting end.

In the above technical solution, the negative electrode winding ending end extends beyond the positive electrode winding ending end, and/or the negative electrode winding starting end extends beyond the positive electrode winding starting end, which is conducive to the positive electrode active material layer being fully covered by the negative electrode active material layer, reducing the risk of lithium precipitation in the electrochemical device, thereby improving the safety of the electrochemical device.

In some embodiments, along the winding direction of the wound electrode assembly, a length by which the negative electrode winding ending end extends beyond the positive electrode winding ending end is greater than or equal to 1mm. This is conducive to the positive electrode active material layer being fully covered by the negative electrode active material layer, reducing the risk of lithium precipitation in the electrochemical device.

In some embodiments, along the direction opposite the winding direction of the wound electrode assembly, a length by which the negative electrode winding starting end extends beyond the positive electrode winding starting end is greater than or equal to 1mm. This is conducive to the positive electrode active material layer being fully covered by the negative electrode active material layer, reducing the risk of lithium precipitation in the electrochemical device.

In some embodiments, an outermost circle electrode plate of the wound electrode assembly is the negative electrode plate, and/or an innermost circle electrode plate of the wound electrode assembly is the negative electrode plate. This is conducive to the positive electrode plate of the wound electrode assembly being fully covered by the negative electrode plate, reducing the risk of lithium precipitation in the electrochemical device.

In some embodiments, the housing includes a cover, a side wall, and a bottom wall, the side wall being cylindrical, and the electrochemical device further includes an electrode terminal and a positive electrode current collecting member, the wound electrode assembly includes a positive electrode tab, and the electrode terminal is disposed on the cover and is electrically connected to the positive electrode tab through the positive electrode current collecting member. In the above technical solution, the electrode terminal and the positive electrode tab are electrically connected through the positive electrode current collecting member, which is conducive to improving the stability of the electrical connection between the electrode terminal and the positive electrode tab.

In some embodiments, the electrochemical device further includes a negative electrode current collecting member, the wound electrode assembly includes a negative electrode tab, and the bottom wall is electrically connected to the negative electrode tab through the negative electrode current collecting member. In the above technical solution, the bottom wall and the negative electrode tab are electrically connected through the negative electrode current collecting member, which is conducive to improving the stability of the electrical connection between the negative electrode terminal and the negative electrode tab.

In some embodiments, the housing includes a cover, a side wall, and a bottom wall, the side wall being cylindrical, and the electrochemical device further includes an electrode terminal and a positive electrode current collecting member, the positive electrode plate further includes a positive electrode current collector, and the positive electrode current collector includes a positive electrode coating region and a positive electrode tab region, the positive electrode tab region being located at one end in a width direction of the positive electrode current collector; where the positive electrode active material layer is disposed on a surface of the positive electrode coating region, the positive electrode tab region is bent toward the winding centerline to form a first end surface of the wound electrode assembly, and the electrode terminal is disposed on the cover and is electrically connected to the first end surface through the positive electrode current collecting member. In the above technical solution, the electrode terminal is disposed on the cover and connected to the first end surface through the positive electrode current collecting member, which is conducive to increasing the connection area between the positive electrode current collecting member and the positive electrode plate, thereby improving the rate performance of the electrochemical device.

In some embodiments, the electrochemical device includes a negative electrode active material layer and a negative electrode current collecting member, the negative electrode plate includes a negative electrode current collector, and the negative electrode current collector includes a negative electrode coating region and a negative electrode tab region, the negative electrode tab region being located at one end in a width direction of the negative electrode current collector; where the negative electrode active material layer is disposed on a surface of the negative electrode coating region, the negative electrode tab region is bent toward the winding centerline to form a second end surface of the wound electrode assembly, and the bottom wall is connected to the second end surface through the negative electrode current collecting member. In the above technical solution, the bottom wall is connected to the second end surface through the negative electrode current collecting member, which is conducive to increasing the connection area between the negative electrode current collecting member and the negative electrode plate, thereby improving the rate performance of the electrochemical device.

According to a second aspect, this application provides an electric device, including the electrochemical device according to any one of the embodiments of the first aspect.

**BRIEF DESCRIPTION OF DRAWINGS**

To describe the technical solutions of the embodiments of this application more clearly, the following briefly describes the accompanying drawings required for describing the embodiments. It should be understood that the accompanying drawings below show merely some embodiments of this application and thus should not be considered as limitations on the scope.

FIG. 1 is a comparison diagram of a winding central hole of an electrode assembly before and after swelling;
FIG. 2 is a schematic structural diagram of an electrochemical device according to some embodiments of this application;
FIG. 3 is a schematic structural diagram of an electrochemical device according to some other embodiments of this application;
FIG. 4 is a schematic structural diagram of an electrochemical device according to still some other embodiments of this application;
FIG. 5 is an exploded view of an electrochemical device according to some embodiments of this application;
FIG. 6 is an exploded view of an electrochemical device according to some other embodiments of this application;
FIG. 7 is an exploded view of an electrochemical device according to still some embodiments of this application;
FIG. 8 is an exploded view of an electrochemical device according to yet some other embodiments of this application; and
FIG. 9 is a CT image of a base cylindrical steel housing lithium-ion battery after cycling with $\alpha=45°$.

Reference signs: 100', 100-electrochemical device; 10', 10-housing; 11-cover; 12-side wall; 121-opening; 13-bottom wall; 20', 20-wound electrode assembly; 21', 21-positive electrode plate; 211', 211-positive electrode active material layer; 2111', 2111-positive electrode winding starting end; 2112', 2112-positive electrode winding ending end; 212-positive electrode current collector; 2121-positive electrode coating region; 2122-positive electrode tab region; 2123-first end surface; 22', 22-negative electrode plate; 221', 221-negative electrode active material layer; 2211', 2211-negative electrode winding starting end; 2212', 2212-negative electrode winding ending end; 222-negative electrode current collector; 2221-negative electrode coating region; 2222-negative electrode tab region; 2223-second end surface; 23', 23-separator; 24-winding central hole; 24a-winding central hole before deformation; 24b-winding central hole after deformation; 25-positive electrode tab; 26-negative electrode tab; 40-electrode terminal; 50-positive electrode current collecting member; 60-negative electrode current collecting member; A-first position; B-second position; C-third position; D-fourth position; E1-fifth position; E2-sixth position; F1-winding centerline; F2-first reference line; F3-second reference line; F4-third reference line; and X-winding direction.

**DESCRIPTION OF EMBODIMENTS**

To make the objectives, technical solutions, and advantages of this application clearer, the following clearly and completely describes the technical solutions in the embodiments of this application with reference to the accompanying drawings in the embodiments of this application. Apparently, the described embodiments are some but not all embodiments of this application.

It should be noted that, without conflict, the embodiments and features in the embodiments in this application may be combined with each other.

It should be noted that similar reference numerals and letters indicate similar items in the following drawings, and therefore once an item is defined in one drawing, it does not need to be further defined or explained in the subsequent drawings.

In the description of the embodiments of this application, it should be noted that the orientations or positional relationships as indicated are orientations or positional relationships based on the accompanying drawings, or conventional orientations or positional relationships of products of this application, or orientations or positional relationships as conventionally understood by persons skilled in the art, and the orientations or positional relationships as indicated are merely for ease and brevity of description of this application rather than indicating or implying that the apparatuses or elements mentioned must have specific orientations or must be constructed or manipulated according to specific orientations, and therefore cannot be understood as limitations on this application. In addition, the terms "first", "second", "third", and the like are merely intended for distinguishing purposes and shall not be understood as any indication or implication of relative importance.

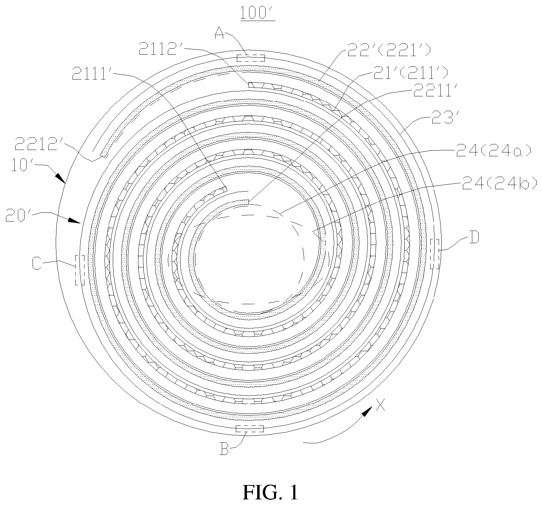

As shown in FIG. 1, an electrochemical device 100' includes a housing 10' and a wound electrode assembly 20', where the electrode assembly 20' is accommodated in the housing 10'. The electrode assembly 20' includes a positive electrode plate 21', a negative electrode plate 22', and a separator 23', where the separator 23' is located between the positive electrode plate 21' and the negative electrode plate 22' to isolate the positive electrode plate 21' from the negative electrode plate 22'. The electrochemical device 100' is charged and discharged through the moving of metal ions between the positive electrode plate 21' and the negative electrode plate 22'. Along a winding direction X, a negative electrode winding ending end 2212' of a negative electrode active material layer 221' of the negative electrode plate 22' extends beyond a positive electrode winding ending end 2112' of a positive electrode active material layer 211' of the positive electrode plate 21' to ensure the safety of the electrochemical device. In a region between the positive electrode winding ending end 2112' and the negative electrode winding ending end 2212', there is a gap between an outermost side of the electrode assembly 20' and the housing 10'. The wound electrode assembly 20' includes a wound electrode assembly of a cylindrical structure, and a shape of the housing 10' can match a shape of the electrode assembly. For example, if the electrode assembly is cylindrical, the housing 10' can also be cylindrical.

The inventor has found through research that for an electrochemical device 100' with a wound electrode assembly 20' of a cylindrical structure, during the charge process of the electrochemical device 100', the negative electrode plate 22' may swell due to intercalation of metal ions. Due to a smaller curvature of an inner winding circle, the required radius change for the inner winding circle is larger to reach a same volume expansion. However, the radius change of the inner winding circle is restricted, forming inward radial pressure, which over time easily leads to the collapse of the electrode plate in the inner winding circle, affecting the service life of the electrochemical device 100'. Meanwhile, because the wound electrode assembly 20' has a spiral involute structure, its diameter at the positive electrode winding ending end 2112' is the largest, and the inward radial pressure is also the greatest. Additionally, when the housing 10' is also of a cylindrical structure, with the progression of cycling and the swelling of the electrode assembly 20', a first position A where an outermost side of the electrode assembly 20' corresponds to the positive electrode winding ending end 2112' and a second position B on a same radial line as the first position A will first come into contact with an inner wall of the housing 10'. The housing 10' further applies radial compressive force pointing to the winding centerline F1 at the first position A and the second position B, gradually transforming a circular winding central hole 24 (that is, the winding central hole before deformation 24a in FIG. 1) of the electrode assembly into an elliptical winding central hole 24 (that is, the winding central hole 24b after deformation in FIG. 1). The minor axis of the elliptical winding central hole 24b lies on a line connecting the first position A and the second position B, and the major axis of the elliptical winding central hole 24b lies on a line connecting the third position C and the fourth position D.

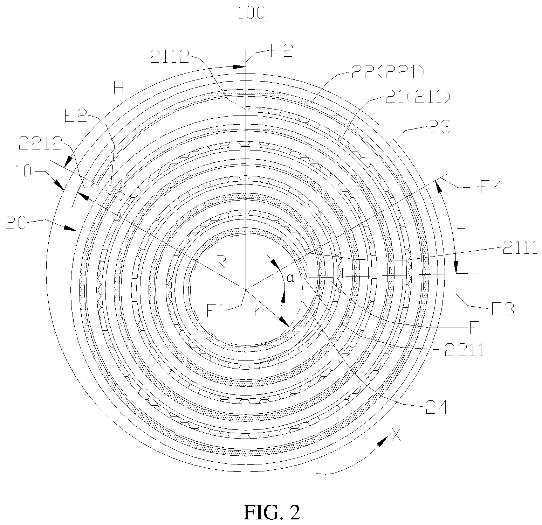

Based on the above considerations, to alleviate the failure of the electrochemical device caused by the collapse of the electrode plate and to extend the service life of the electrochemical device, the inventor has conducted in-depth research and proposed an electrochemical device 100, as shown in FIG. 2 to FIG. 4. The electrochemical device 100 includes a housing 10 and a wound electrode assembly 20. An accommodating space is formed inside the housing 10. The wound electrode assembly 20 is accommodated in the accommodating space, where the wound electrode assembly 20 has a winding centerline F1, the wound electrode assembly 20 includes a positive electrode plate 21 and a negative electrode plate 22, the positive electrode plate 21 includes a positive electrode active material layer 211, and along a winding direction X of the positive electrode plate 21, the positive electrode active material layer 211 has a positive electrode winding starting end 2111 and a positive electrode winding ending end 2112; where when observed along a direction of the winding centerline F1, a straight line passing through the positive electrode winding ending end 2112 and orthogonal to the winding centerline F1 is defined as a first reference line F2, a straight line orthogonal to the first reference line F2 and orthogonal to the winding centerline F1 is defined as a second reference line F3, and a straight line passing through the positive electrode winding starting end 2111 and orthogonal to the winding centerline F1 is defined as a third reference line F4, where a zero or acute angle $\alpha$ exists between the third reference line F4 and the second reference line F3, satisfying $0° \leq \alpha \leq 30°$.

When the angle between the third reference line F4 and the second reference line F3 is set as a zero or acute angle $\alpha$, satisfying $0° \leq \alpha \leq 30°$, the positive electrode winding starting end 2111 of the positive electrode active material layer 211 is disposed close to the second reference line F3. On one hand, since the second reference line F3 is near a major axis of the elliptical winding central hole after deformation, and endpoints of the major axis of the elliptical winding central hole have a smaller curvature, being able to withstand greater pressure, the collapse failure of the electrode plate winding starting end is inhibited. On the other hand, the positive electrode winding starting end 2111 being near the major axis endpoints of the elliptical winding central hole after deformation can provide good arch support, allowing the electrode plate in an inner winding circle to withstand greater radial pressure along the first reference line F2, thereby inhibiting the collapse of the electrode plate in the inner winding circle. This reduces the risk of electrochemical device 100 failure due to the collapse of the electrode plate in the inner winding circle, thereby improving the service life of the electrochemical device 100.

The housing 10 may be cylindrical, and an axis of the housing 10 may be parallel to the winding centerline F1 of the wound electrode assembly 20. In some cases, the axis of the housing 10 and the winding centerline F1 of the electrode assembly may also coincide.

The electrode assembly 20 further includes a separator 23, and the positive electrode plate 21, the separator 23, and the negative electrode plate 22 are stacked and wound to form the wound electrode assembly 20. The separator 23 is used to isolate the positive electrode plate 21 and the negative electrode plate 22. The material of the separator 23 may be polypropylene (PP) or polyethylene (PE), and the like.

The electrochemical device 100 mainly relies on movement of metal ions between the positive electrode plate 21 and the negative electrode plate 22 to work. The positive electrode plate 21 includes a positive electrode active material layer 211 and a positive electrode current collector 212. The negative electrode plate 22 includes a negative electrode active material layer 221 and a negative electrode current collector 222. Taking a lithium-ion battery as an example, the material of the positive electrode current collector 212 may be aluminum, and the positive electrode active material may be lithium cobalt oxide, lithium iron phosphate, lithium nickel cobalt manganese oxide, lithium nickel cobalt aluminum oxide, or lithium manganese oxide, and the like. The negative electrode current collector 222 may be made of copper, and the negative electrode active material may be carbon, silicon, or the like.

Along a thickness direction of the positive electrode current collector 212, two opposite surfaces of the positive electrode current collector 212 may both be provided with the positive electrode active material layer 211. Along a thickness direction of the negative electrode current collector 222, two opposite surfaces of the negative electrode current collector 222 may both be provided with the negative electrode active material layer 221.

The positive electrode winding starting end 2111 refers to an end of the positive electrode active material layer 211 closest to the winding centerline F1 along the winding direction X. The positive electrode winding ending end 2112 refers to an end of the positive electrode plate 21 furthest from the winding centerline F1 along the winding direction X.

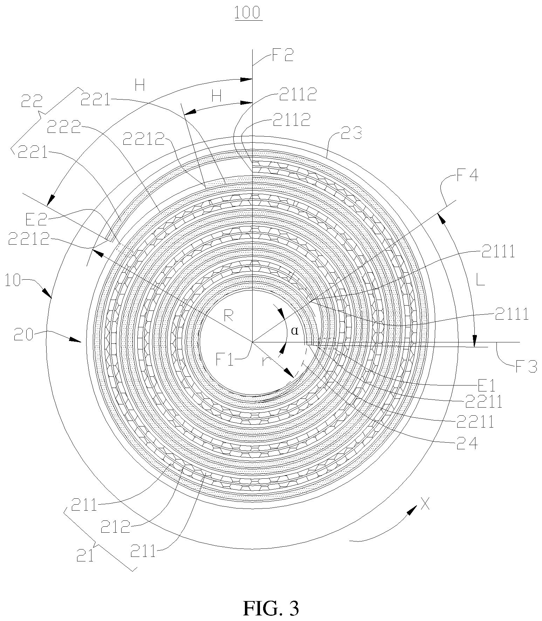

As shown in FIG. 3, in some embodiments, the positive electrode winding ending ends 2112 of the positive electrode active material layers 211 on two surfaces of the positive electrode current collector 212 of the positive electrode plate 21 in the thickness direction of positive electrode current collector 212 may be flush, in which case the first reference line F2 may be a straight line passing through the positive electrode winding ending end 2112 of either of the two positive electrode active material layers 211 and orthogonal to the winding centerline F1.

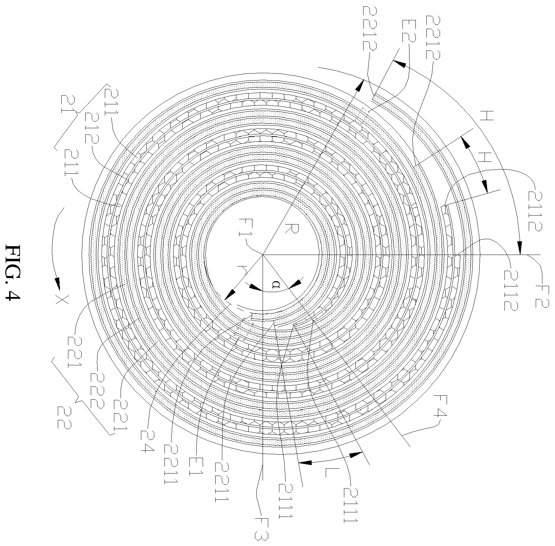

As shown in FIG. 4, in some other embodiments, the positive electrode winding ending ends 2112 of the positive electrode active material layers 211 on two surfaces of the positive electrode current collector 212 of the positive electrode plate 21 in the thickness direction of the positive electrode current collector 212 may not be flush, that is, along the winding direction X, the positive electrode winding ending end 2112 of one of the two positive electrode active material layers 211 extends beyond the positive electrode winding ending end 2112 of the other positive electrode active material layer, or it can be understood that along the winding direction X, the positive electrode winding ending end 2112 of one of the two positive electrode active material layers 211 is located in front of the positive electrode winding ending end 2112 of the other positive electrode active material layer 211. In this case, the first reference line F2 is a straight line passing through the positive electrode winding ending end 2112 located at the rear (closer to the positive electrode winding starting end 2111) in the winding direction X and orthogonal to the winding centerline F1.

Still refer to FIG. 3. In some embodiments, the positive electrode winding starting ends 2111 of the positive electrode active material layers 211 on two surfaces of the positive electrode current collector 212 of the positive electrode plate 21 in the thickness direction of positive electrode current collector 212 may be flush, in which case the third reference line F4 may be a straight line passing through the positive electrode winding starting end 2111 of either of the two positive electrode active material layers 211 and orthogonal to the winding centerline F1.

Still refer to FIG. 4. In some other embodiments, the positive electrode winding starting ends 2111 of the positive electrode active material layers 211 on two surfaces of the positive electrode current collector 212 of the positive electrode plate 21 in the thickness direction of the positive electrode current collector 212 may not be flush, that is, along a direction opposite the winding direction X, the positive electrode winding starting end 2111 of one of the two positive electrode active material layers 211 extends beyond the positive electrode winding starting end 2111 of the other positive electrode active material layer, or it can be understood that along the direction opposite the winding direction X, the positive electrode winding starting end 2111 of one of the two positive electrode active material layers 211 is located in front of the positive electrode winding starting end 2111 of the other positive electrode active material layer 211. In this case, the third reference line F4 is a straight line passing through the positive electrode winding starting end 2111 located at the rear in the direction opposite the winding direction X and orthogonal to the winding centerline F1.

In this embodiment, orthogonal can be understood as perpendicular. Therefore, the first reference line F2 may be understood as a line passing through the positive electrode winding ending end 2112 and perpendicular to the winding centerline F1. The second reference line F3 may be understood as a line perpendicular to the first reference line F2 and the winding centerline F1. The third reference line F4 may be understood as a line passing through the positive electrode winding starting end 2111 and perpendicular to the winding centerline F1.

Please refer to Table 1. Table 1 shows the results of cyclic testing verification for a cylindrical steel housing lithium-ion battery, in which the positive electrode material of the lithium-ion battery is LiNi0.5Co0.2Mn0.3O2, the negative electrode material is graphite, and a radius R of the wound electrode assembly is 5.5mm.

The verification data in Table 1 were measured under the following verification conditions: at an ambient temperature of 20°C±5°C: Step A: The battery was charged at a constant current with a constant rate of 2C. When the voltage reached the charging limit voltage of 4.2V, the battery was charged at a constant voltage of 4.2V until the charging current reached a cutoff current of 0.05C. The battery was then left for standing for 5 minutes. Step B: The battery was discharged at a constant current of 10C until a termination voltage of 2.8V was reached. Step A and Step B were repeated for 300 charge-discharge cycles. Afterward, a CT scanning test is performed to evaluate the collapse conditions of the electrode plates.

The degree of collapse is distinguished as follows: Taking the winding centerline F1 as the reference and the initial radius of the winding central hole 24 was denoted as r. After cycling, if the shortest distance from the electrode plate to the winding centerline F1 is 0.9r-r, it means no collapse; and if collapse occurs after cycling, and the shortest distance from the collapsed electrode plate to the winding centerline F1 is denoted as a, when $0.7r \leq a < 0.9r$, it means slight collapse; when $0.5r \leq a < 0.7r$, it means moderate collapse; and when $0 \leq a < 0.5r$, it means severe collapse.

**Table 1 Cycling test data of wound structures with different sizes**

| | $\alpha$ (°) | Winding Central Hole Radius r | CT Scan Results | Remarks (Location of Positive Electrode Winding Starting End Relative to Second Reference Line) |
|---|---|---|---|---|
| Base | 45 | 0.2R | Severe collapse | For a first end, a side opposite the winding direction |
| Example 1 | 30 | 0.2R | Moderate collapse | For the first end, the side opposite the winding direction |
| Example 2 | 25 | 0.2R | Slight collapse | For the first end, the side opposite the winding direction |
| Example 3 | 20 | 0.2R | Slight collapse | For the first end, the side opposite the winding direction |
| Example 4 | 10 | 0.2R | No collapse | For the first end, the side opposite the winding direction |
| Example 5 | 0 | 0.2R | No collapse | Positive electrode winding starting end is located at the first end of the second reference line |
| Example 6 | -10 | 0.2R | No collapse | For the first end, a side in the winding direction |
| Example 7 | -20 | 0.2R | Slight collapse | For the first end, the side in the winding direction |
| Example 8 | -25 | 0.2R | Slight collapse | For the first end, the side in the winding direction |
| Example 9 | -30 | 0.2R | Moderate collapse | For the first end, the side in the winding direction |
| | | | | |
| Example 10 | 30 | 0.2R | Moderate collapse | For the second end, the side opposite the winding direction |
| Example 11 | 25 | 0.2R | Slight collapse | For the second end, the side opposite the winding direction |
| Example 12 | 20 | 0.2R | Slight collapse | For the second end, the side opposite the winding direction |
| Example 13 | 10 | 0.2R | No collapse | For the second end, the side opposite the winding direction |

(continued)

| | $\alpha$ (°) | Winding Central Hole Radius r | CT Scan Results | Remarks (Location of Positive Electrode Winding Starting End Relative to Second Reference Line) |
|---|---|---|---|---|
| Example 14 | 0 | 0.2R | No collapse | Positive electrode winding starting end is located at the second end of the second reference line opposite the first end |
| Example 15 | -10 | 0.2R | No collapse | For the second end, the side in the winding direction |
| Example 16 | -20 | 0.2R | Slight collapse | For the second end, the side in the winding direction |
| Example 17 | -25 | 0.2R | Slight collapse | For the second end, the side in the winding direction |
| Example 18 | -30 | 0.2R | Moderate collapse | For the second end, the side in the winding direction |
| | | | | |
| Example 19 | 20 | 0.1R | Moderate collapse | For the first end, the side opposite the winding direction |
| Example 20 | 20 | 0.15R | Slight collapse | For the first end, the side opposite the winding direction |
| Example 21 | 20 | 0.3R | No collapse | For the first end, the side opposite the winding direction |
| Example 22 | 20 | 0.4R | No collapse | For the first end, the side opposite the winding direction |
| Example 23 | 20 | 0.5R | No collapse | For the first end, the side opposite the winding direction |
| Example 24 | 20 | 0.6R | No collapse | For the first end, the side opposite the winding direction The winding central hole is too large, resulting in too low energy density. |

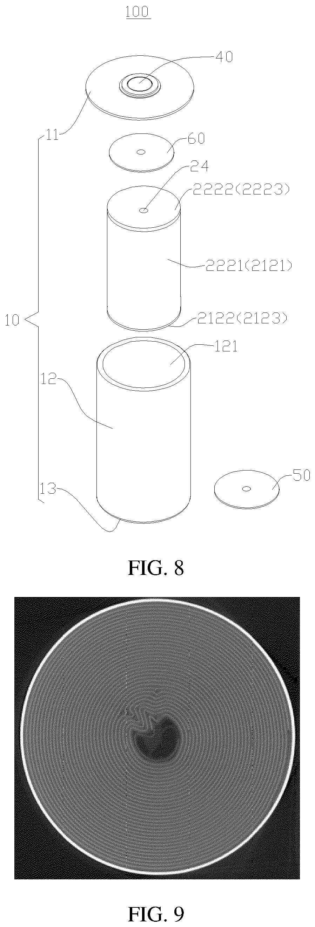

It can be seen from Table 1 and FIG. 9 that under the same test conditions, when $\alpha$ is 45°, the collapse of the electrode plates is very severe; compared with the case of $\alpha$ being 45°, in examples 1 to 18 where $\alpha$ is ±30°, the collapse of the electrode plates is significantly alleviated, and in addition, when $\alpha$ is ±10°, the electrode plates do not collapse, showing that with the decrease in $\alpha$, the degree of collapse of the electrode plates decreases.

The first end and the second end in Table 1 are the respectively two opposite intersections of the second reference line F3 with the wound electrode assembly 20. It should be noted that the third reference line F4 may be on a side of the second reference line F3 in the winding direction X, or on another side of the second reference line F3 in the direction opposite the winding direction X, that is, $\alpha$ may be a positive angle or a negative angle, meaning the third reference line F4 may deviate a certain angle value relative to the second reference line F3 in the winding direction X or the direction opposite the winding direction X. To perform test in both situations, +$\alpha$ and -$\alpha$ are used for distinction.

In some embodiments, 0°≤$\alpha$≤25°. Further, in some embodiments, 0°≤$\alpha$≤10°.

Still refer to Table 1. When $\alpha$ is ±30°, although the situation of electrode plate collapse is alleviated compared to the case of $\alpha$ being 45°, there is still moderate collapse of the electrode plates; and when $\alpha$ is ±25°, ±10°, or 0°, the electrode plates are only slightly collapsed or not collapsed, showing that the structural stability of the wound electrode assembly is greatly improved, and the service life of the lithium-ion battery is further increased.

In some embodiments, $\alpha$ may be 5°, 8°, 11°, 13°, 15°, 18°, and the like.

When 0°≤$\alpha$≤25°, the positive electrode winding starting end 2111 of the positive electrode active material layer 211 is disposed closer to the second reference line F3. On one hand, this can better inhibit the collapse failure of the electrode plate winding starting end, and on the other hand, this can better support the electrode plate in an inner winding circle, further inhibiting the collapse of the electrode plate in the inner winding circle, thereby improving the service life of the electrochemical device 100.

In some embodiments, the wound electrode assembly 20 has a winding central hole 24, a radius of the winding central hole 24 is r, and a radius of the wound electrode assembly 20 is R, satisfying r≥0.15R.

In this embodiment, the radius r of the winding central hole 24 may be equivalent to a radius of a circle with a circumference equal to a length of the electrode plate in the innermost circle and centered on the winding centerline F1. The length of the electrode plate in the innermost circle refers to the length of the segment from the starting end of the electrode plate in the innermost circle along the winding direction X to the first alignment of this starting end. For example, if the innermost circle of the wound electrode assembly 20 is the negative electrode plate 22, the length of the electrode plate in the innermost circle is a length of a segment from the negative electrode winding starting end 2211 of the negative electrode plate 22 along the winding direction X to the position where the negative electrode winding starting end 2211 is aligned for the first time in the radial direction of the wound electrode assembly 20 (the fifth position E1 in the figure).

The radius R of the wound electrode assembly 20 may be equivalent to a radius of a circle with a circumference equal to a length of the electrode plate in the outermost circle and centered on the winding centerline F1. The length of the electrode plate in the outermost circle refers to a length of a segment from the ending end of the electrode plate in the outermost circle along the direction opposite the winding direction X to a first alignment of this ending end in the radial direction of the wound electrode assembly 20 (the sixth position E2 in the figure).

Still refer to Table 1. In embodiments 3, and embodiment 19 to embodiment 24, when r is 0.1R, the collapse degree of the electrode plates is relatively large; compared to the case of r being 0.1R, when r is 0.15R or 0.2R, the electrode plates are only slightly collapsed, and when r is 0.3R, 0.4R, 0.5R, and 0.6R, the electrode plates are almost not collapsed.

Therefore, the radius R of the wound electrode assembly 20 and the radius r of the winding central hole 24 of the wound electrode assembly 20 satisfying r≥0.15R enables the winding central hole 24 to have enough space, and when an inner winding circle of the wound electrode assembly 20 is subjected to radial pressure, enough buffer space exists to provide a certain buffer, thereby further alleviating the collapse of the electrode plates in the inner winding circle.

Further, r≥0.3R. As shown in Table 1, when r is 0.3R, 0.4R, 0.5R, and 0.6R, the electrode plates are almost not collapsed.

Further, r≤0.5R. As can be seen from Table 1, when r is 0.6R, although the electrode plates are almost not collapsed, the space of the winding central hole 24 is too large, occupying a large internal space of the housing 10, resulting in a lower energy density of the electrochemical device 100.

In some embodiments, for example, r may be 0.45R, 0.35R, 0.25R, 0.18R, and the like.

In some embodiments, r≥1mm. For example, r may be 2mm, 3mm, 4mm, 5mm, and the like. When r≥1mm, the winding central hole 24 has enough space, and the risk of collapse of the electrode plates in an inner winding circle is low. This is conducive to sufficient infiltration of the electrolyte into the wound electrode assembly 20, thereby helping to fully utilize the capacity of the active material.

Still refer to FIG. 2 to FIG. 4. The negative electrode plate 22 includes a negative electrode active material layer 221, the negative electrode active material layer 221 has a negative electrode winding ending end 2212, and along a winding direction X of the wound electrode assembly 20, the negative electrode winding ending end 2212 extends beyond the positive electrode winding ending end 2112.

The negative electrode winding ending end 2212 refers to the end of the negative electrode active material layer 221 furthest from the winding centerline F1 along the winding direction X, specifically the end of the negative electrode active material layer 221 furthest from the winding center along the winding direction X.

Along the winding direction X, there is a distance between the negative electrode winding ending end 2212 and the positive electrode winding ending end 2112, and the negative electrode winding ending end 2212 is in front of the positive electrode winding ending end 2112.

In embodiments where two opposite surfaces in the thickness direction of the negative electrode current collector 222 of the negative electrode plate 22 are both provided with the negative electrode active material layer 221, and two opposite surfaces in the thickness direction of the positive electrode current collector 212 of the positive electrode plate 21 are both provided with the positive electrode active material layer 211, the negative electrode winding ending end 2212 of each negative electrode active material layer 221 can extend only along the winding direction X beyond the positive electrode winding ending end 2112 of the positive electrode active material layer 211 provided opposite the negative electrode active material layer 221 with the separator 23 in between.

Along the winding direction X of the wound electrode assembly 20, the negative electrode winding ending end 2212 of the negative electrode active material layer 221 extending beyond the positive electrode winding ending end 2112 of the positive electrode active material layer 211 is conducive to the positive electrode active material layer 211 being fully covered by the negative electrode active material layer 221, reducing the risk of lithium precipitation in the electrochemical device 100.

As shown in FIG. 2 to FIG. 4, along the winding direction X of the wound electrode assembly 20, a length by which the negative electrode winding ending end 2212 extends beyond the positive electrode winding ending end 2112 is greater than or equal to 1mm.

It can be understood as the length by which the negative electrode winding ending end 2212 of the negative electrode active material layer 221 extends along the winding direction X beyond the positive electrode winding ending end 2112 of the positive electrode active material layer 211 provided opposite and facing the negative electrode active material layer 221 is greater than or equal to 1mm. That is, the distance H in the winding direction X between the negative electrode winding ending end 2212 of the negative electrode active material layer 221 and the positive electrode winding ending end 2112 of the positive electrode active material layer 211 provided opposite the negative electrode active material layer 221 with the separator 23 in between satisfies H≥1mm. H may be 2mm, 3mm, 4mm, 5mm, and the like.

The length by which the negative electrode winding ending end 2212 extends beyond the positive electrode winding ending end 2112 being greater than or equal to 1mm is conducive to the positive electrode active material layer 211 being fully covered by the negative electrode active material layer 221, reducing the risk of lithium precipitation in the electrochemical device 100.

In some other embodiments, the negative electrode winding ending end 2212 may also be flush with the positive electrode winding ending end 2112.

Still refer to FIG. 2 to FIG. 4. Along the direction opposite the winding direction X of the wound electrode assembly 20, the negative electrode winding starting end 2211 extends beyond the positive electrode winding starting end 2111.

The negative electrode winding starting end 2211 is located on an inner side of the positive electrode winding starting end 2111, that is, along the radial direction of the wound electrode assembly 20, a distance between the negative electrode winding starting end 2211 and the winding centerline F1 is less than a distance between the positive electrode winding starting end 2111 and the winding centerline F1.

The negative electrode winding starting end 2211 refers to an end of the negative electrode active material layer 221 closest to the winding centerline F1 along the winding direction X.

In embodiments where two opposite surfaces in the thickness direction of the negative electrode current collector 222 of the negative electrode plate 22 are both provided with the negative electrode active material layer 221, and two opposite surfaces in the thickness direction of the positive electrode current collector 212 of the positive electrode plate 21 are both provided with the positive electrode active material layer 211, the negative electrode winding starting end 2211 of each negative electrode active material layer 221 can extend only along the direction opposite the winding direction X beyond the positive electrode winding starting end 2111 of the positive electrode active material layer 211 provided opposite the negative electrode active material layer 221 with the separator 23 in between.

Along the direction opposite the winding direction X of the wound electrode assembly 20, the negative electrode winding starting end 2211 of the negative electrode active material layer 221 extending beyond the positive electrode winding starting end 2111 of the positive electrode active material layer 211 is conducive to the positive electrode active material layer 211 being fully covered by the negative electrode active material layer 221, reducing the risk of lithium precipitation in the electrochemical device 100.

As shown in FIG. 2 to FIG. 4, along the direction opposite the winding direction X of the wound electrode assembly 20, the length by which the negative electrode winding starting end 2211 extends beyond the positive electrode winding starting end 2111 is greater than or equal to 1mm.

It can be understood as the length by which the negative electrode winding starting end 2211 of the negative electrode active material layer 221 extends along the direction opposite the winding direction X beyond the positive electrode winding starting end 2111 of the positive electrode active material layer 211 provided opposite and facing the negative electrode active material layer 221 is greater than or equal to 1mm. That is, the distance L in the direction opposite the winding direction X between the negative electrode winding starting end 2211 of the negative electrode active material layer 221 and the positive electrode winding starting end 2111 of the positive electrode active material layer 211 provided opposite the negative electrode active material layer 221 with the separator 23 in between satisfies L≥1mm. L may be 2mm, 3mm, 4mm, 5mm, and the like.

The length by which the negative electrode winding starting end 2211 extends beyond the positive electrode winding starting end 2111 being greater than or equal to 1mm is conducive to the positive electrode active material layer 211 being fully covered by the negative electrode active material layer 221, reducing the risk of lithium precipitation in the electrochemical device 100.

In other embodiments, the negative electrode winding starting end 2211 may also be flush with the positive electrode winding starting end 2111.

As shown in FIG. 2 to FIG. 4, in some embodiments, an outermost circle electrode plate of the wound electrode assembly 20 is the negative electrode plate 22, and/or an innermost circle electrode plate of the wound electrode assembly 20 is the negative electrode plate 22. It may be that the outermost circle electrode plate of the wound electrode assembly 20 is the negative electrode plate 22, and the innermost circle electrode plate of the wound electrode assembly 20 is the positive electrode plate 21; or it may be that the outermost circle electrode plate of the wound electrode assembly 20 is the positive electrode plate 21, and the innermost circle electrode plate of the wound electrode assembly 20 is the negative electrode plate 22; or it may be that both the outermost circle electrode plate and the innermost circle electrode plate of the wound electrode assembly 20 are the negative electrode plates 22.

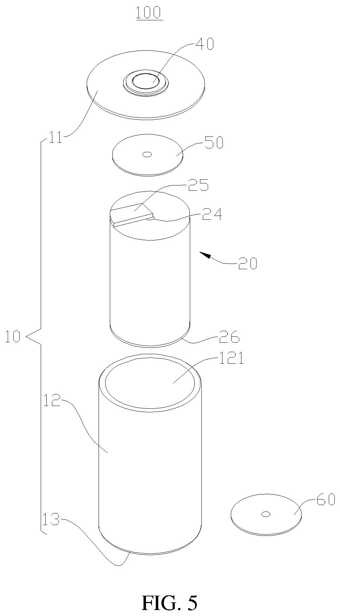

As shown in FIG. 5, in some embodiments, the housing 10 includes a cover 11, a side wall 12, and a bottom wall 13, the side wall 12 being cylindrical, and the electrochemical device 100 further includes an electrode terminal 40 and a positive electrode current collecting member 50, the wound electrode assembly 20 includes a positive electrode tab 25, and the electrode terminal 40 is disposed on the cover 11 and is electrically connected to the positive electrode tab 25 through the positive electrode current collecting member 50.

The positive electrode tab 25 is electrically connected to the positive electrode current collector 212 of the positive electrode plate 21. The positive electrode tab 25 protrudes from one side of the positive electrode plate 21 along an extension direction of the winding centerline F1, and the extension direction of the winding centerline F1 is consistent with a width direction of the positive electrode plate 21. The positive electrode tab 25 and the positive electrode current collector 212 may be provided separately and then connected into an integral structure by welding, bonding, and the like. The positive electrode tab 25 and the positive electrode current collector 212 may also be integrally formed. The material of the positive electrode tab 25 may be the same as or different from the material of the positive electrode current collector 212. The number of positive electrode tabs 25 may be one or multiple. Multiple includes two and more. In this embodiment, the size of the positive electrode tab 25 along the winding direction X is smaller than the size of the positive electrode current collector 212 along the winding direction X.

The bottom wall 13 is connected to one end of the side wall 12 along its axial direction, and the bottom wall 13 and the side wall 12 may be integrally formed or provided separately and then connected into one piece through welding, bonding, and the like. An opening 121 is formed at another end of the side wall 12 along its axial direction opposite the bottom wall 13, and the cover 11 is configured to seal the opening 121 so that the cover 11, the side wall 12, and the bottom wall 13 together form the accommodating space for accommodating the wound electrode assembly 20.

As shown in FIG. 5, the electrode terminal 40 may be insulated from and provided on the cover 11. The positive electrode current collecting member 50 is a conductive component, and the electrical connection between the positive electrode tab 25 and the electrode terminal 40 is implemented through the positive electrode current collecting member 50. The positive electrode current collecting member 50 may be welded or abutted with the positive electrode tab 25. The positive electrode current collector 212 may be welded or abutted with the electrode terminal 40. In this case, the negative electrode plate 22 may be electrically connected with the side wall 12 or the bottom wall 13.

The electrode terminal 40 and the positive electrode tab 25 being electrically connected through the positive electrode current collecting member 50 is conducive to improving the stability of the electrical connection between the electrode terminal 40 and the positive electrode tab 25.

Still refer to FIG. 5. In some embodiments, the electrochemical device 100 further includes a negative electrode current collecting member 60, the wound electrode assembly 20 includes a negative electrode tab 26, and the bottom wall 13 is electrically connected to the negative electrode tab 26 through the negative electrode current collecting member 60.

The negative electrode tab 26 is electrically connected to the negative electrode current collector 222 of the negative electrode plate 22. The negative electrode tab 26 protrudes from one side of the negative electrode plate 22 along an extension direction of the winding centerline F1, and the extension direction of the winding centerline F1 is consistent with a width direction of the negative electrode plate 22. The negative electrode tab 26 and the negative electrode current collector 222 may be provided separately and then connected into an integral structure by welding, bonding, and the like. The negative electrode tab 26 and the negative electrode current collector 222 may also be integrally formed. The material of the negative electrode tab 26 may be the same as or different from the material of the negative electrode current collector 222. The number of negative electrode tabs 26 may be one or multiple. In this embodiment, the size of the negative electrode tab 26 along the winding direction X is smaller than the size of the negative electrode current collector 222 along the winding direction X.

The positive electrode tab 25 and the negative electrode tab 26 are respectively located at two ends of the wound electrode assembly 20 in the winding centerline F1.

The negative electrode current collecting member 60 may be welded or abutted with the negative electrode tab 26. The negative electrode current collecting member 60 may be welded or abutted with the bottom wall 13.

The bottom wall 13 and the negative electrode tab 26 being electrically connected through the negative electrode current collecting member 60 is conducive to improving the stability of the electrical connection between the negative electrode terminal and the negative electrode tab 26.

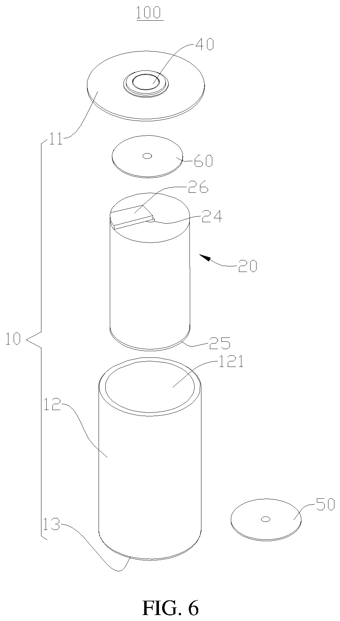

As shown in FIG. 6, in some other embodiments, the positive electrode tab 25 may be electrically connected to the bottom wall 13 through the positive electrode current collecting member 50, and the negative electrode tab 26 may be electrically connected to the electrode terminal 40 through the negative electrode current collecting member 60.

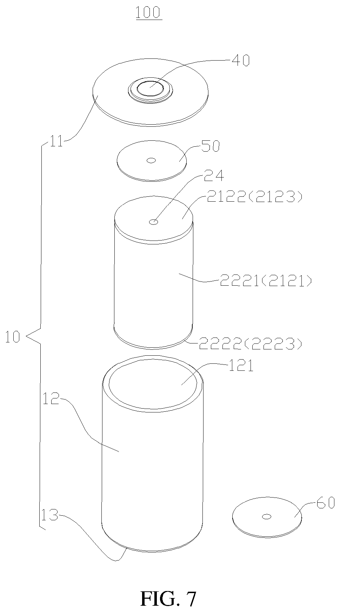

As shown in FIG. 7, in some embodiments, the housing 10 includes a cover 11, a side wall 12, and a bottom wall 13, the side wall 12 being cylindrical, and the electrochemical device 100 further includes an electrode terminal 40 and a positive electrode current collecting member 50. The positive electrode plate 21 further includes a positive electrode current collector 212, and the positive electrode current collector 212 includes a positive electrode coating region 2121 and a positive electrode tab region 2122, the positive electrode tab region 2122 being located at one end in a width direction of the positive electrode current collector 212, where the positive electrode active material layer 211 is disposed on a surface of the positive electrode coating region 2121, the positive electrode tab region 2122 is bent toward the winding centerline F1 to form a first end surface 2123 of the wound electrode assembly 20, and the electrode terminal 40 is disposed on the cover 11 and is electrically connected to the first end surface 2123 through the positive electrode current collecting member 50.

The width direction of the positive electrode current collector 212 is parallel to the width direction of the positive electrode plate 21. The positive electrode tab region 2122 is a region on one side of the positive electrode current collector 212 along its width direction that is not coated with the positive electrode active material layer 211. When the positive electrode plate 21 is in an unfolded state, a dimension of the positive electrode tab region 2122 along a length direction of the positive electrode plate 21 is the same as a dimension of the positive electrode coating region 2121 along a length direction of the positive electrode plate 21. When the positive electrode plate 21 is in a wound state, the length direction of the positive electrode plate 21 is consistent with the winding direction X.

When the positive electrode plate 21 is in a wound state, the positive electrode tab region 2122 is bent toward the winding centerline F1 through a flattening method, forming a relatively flat first end surface 2123.

The positive electrode current collecting member 50 may be welded or abutted with the first end surface 2123. The electrode terminal 40 is disposed on the cover 11 and connected to the first end surface 2123 through the positive electrode current collecting member 50, which is conducive to increasing the connection area between the positive electrode current collecting member 50 and the positive electrode plate 21, thereby improving the rate performance of the electrochemical device 100.

Still refer to FIG. 7. In some embodiments, the electrochemical device 100 further includes a negative electrode current collecting member 60, the negative electrode plate 22 further includes a negative electrode current collector 222, the negative electrode current collector 222 includes a negative electrode coating region 2221 and a negative electrode tab region 2222, the negative electrode tab region 2222 being located at one end in a width direction of the negative electrode current collector 222, where the negative electrode active material layer 221 is disposed on a surface of the negative electrode coating region 2221, the negative electrode tab region 2222 is bent toward the winding centerline F1 to form a second end surface 2223 of the wound electrode assembly 20, and the bottom wall 13 is connected to the second end surface 2223 through the negative electrode current collecting member 60.

The width direction of the negative electrode current collector 222 is parallel to the width direction of the negative electrode plate 22. The negative electrode tab region 2222 is a region on one side of the negative electrode current collector 222 along its width direction that is not coated with the negative electrode active material layer 221. When the negative electrode plate 22 is in an unfolded state, a dimension of the negative electrode tab region 2222 along a length direction of the negative electrode plate 22 is the same as a dimension of the negative electrode coating region 2221 along a length direction of the negative electrode plate 22. When the negative electrode plate 22 is in a wound state, the length direction of the negative electrode plate 22 is consistent with the winding direction X.

When the negative electrode plate 22 is in a wound state, the negative electrode tab region 2222 is bent toward the winding centerline F1 through a flattening method, forming a relatively flat second end surface 2223. The first end surface 2123 and the second end surface 2223 are respectively located at two ends of the wound electrode assembly 20 in the extension direction of the winding centerline F1.

The negative electrode current collecting member 60 may be welded or abutted with the second end surface 2223. The bottom wall 13 being connected to the second end surface 2223 through the negative electrode current collecting member 60 is conducive to increasing the connection area between the negative electrode current collecting member 60 and the negative electrode plate 22, thereby improving the rate performance of the electrochemical device 100.

As shown in FIG. 8, in some other embodiments, the first end surface 2123 may be electrically connected to the bottom wall 13 through the positive electrode current collecting member 50, and the second end surface 2223 may be electrically connected to the electrode terminal through the negative electrode current collecting member 60.

Of course, in some other embodiments, it may be that the wound electrode assembly 20 includes a negative electrode tab 26, where the negative electrode tab 26 is electrically connected to the negative electrode current collector 222 of the negative electrode plate 22, and the negative electrode tab 26 is electrically connected to the electrode terminal 40 through the negative electrode current collector 222. The positive electrode plate 21 includes a positive electrode current collector 212, and the positive electrode current collector 212 includes a positive electrode coating region 2121 and a positive electrode tab region 2122, the positive electrode tab region 2122 being located at one end in a width direction of the positive electrode current collector 212, where the positive electrode active material layer 211 is disposed on a surface of the positive electrode coating region 2121, the positive electrode tab region 2122 is bent toward the winding centerline F1 to form a first end surface 2123 of the wound electrode assembly 20. The first end surface 2123 and the negative electrode tab 26 are arranged opposite each other along the extension direction of the winding centerline F1. The bottom wall 13 is connected to the first end surface 2123 through the positive electrode current collecting member 50.

It can also be that the wound electrode assembly 20 includes a positive electrode tab 25. The positive electrode tab 25 is electrically connected to the positive electrode current collector 212 of the positive electrode plate 21. The positive electrode tab 25 is electrically connected to the electrode terminal 40 through the positive electrode current collector 212. The negative electrode plate 22 includes a negative electrode current collector 222. The negative electrode current collector 222 includes a negative electrode coating region 2221 and a negative electrode tab region 2222. The negative electrode tab region 2222 is located at one end in the width direction of the negative electrode current collector 222. The negative electrode active material layer 221 is disposed on the surface of the negative electrode coating region 2221, and the negative electrode tab region 2222 is bent toward the winding centerline F1 to form the second end surface 2223 of the wound electrode assembly 20. The positive electrode tab 25 and the second end surface 2223 are arranged opposite each other along the extension direction of the winding centerline F1. The bottom wall 13 is connected to the second end surface 2223 through the negative electrode current collecting member 60.

The embodiments of this application further provide an electric device, including the electrochemical device 100 provided in any of the foregoing embodiments.

The electric device further includes an electricity-consuming body, and the electrochemical device 100 provides electrical energy to the electricity-consuming body.

The electric device may include, but is not limited to, electronic devices, electric tools, electric transportation tools, drones, and energy storage devices. The electronic device may include a mobile phone, a tablet computer, a notebook computer, or the like, the electric tool may include an electric drill, an electric saw, or the like, and the electric transportation tool may include an electric vehicle, an electric motorcycle, an electric bicycle, or the like.

The foregoing descriptions are merely preferred embodiments of this application which are not intended to limit this application. Persons skilled in the art understand that this application may have various modifications and variations. Any modification, equivalent replacement, and improvement made without departing from the spirit and principle of this application shall fall within the protection scope of this application.

**Claims**

1.  An electrochemical device, comprising:

    a housing, wherein an accommodating space is formed inside the housing; and
    a wound electrode assembly, accommodated in the accommodating space, wherein the wound electrode assembly has a winding centerline, the wound electrode assembly comprises a positive electrode plate and a negative electrode plate, the positive electrode plate comprises a positive electrode active material layer, and along a winding direction of the positive electrode plate, the positive electrode active material layer has a positive electrode winding starting end and a positive electrode winding ending end; wherein
    when observed along a direction of the winding centerline, a straight line passing through the positive electrode winding ending end and orthogonal to the winding centerline is defined as a first reference line, a straight line orthogonal to the first reference line and orthogonal to the winding centerline is defined as a second reference line, and a straight line passing through the positive electrode winding starting end and orthogonal to the winding centerline is defined as a third reference line, wherein a zero or acute angle $\alpha$ exists between the third reference line and the second reference line, satisfying $0° \leq \alpha \leq 30°$.

2.  The electrochemical device according to claim 1, wherein $0° \leq \alpha \leq 25°$.

3.  The electrochemical device according to claim 1, wherein the wound electrode assembly has a winding central hole, a radius of the winding central hole is r, and a radius of the wound electrode assembly is R, satisfying $r \geq 0.15R$.

4.  The electrochemical device according to claim 3, wherein the electrochemical device satisfies at least one of the following conditions:

    $$(1)\ r \geq 0.3R;$$

    $$(2)\ r \leq 0.5R;$$

    or

    $$(3)\ r \geq 1mm.$$

5.  The electrochemical device according to claim 1, wherein the negative electrode plate comprises a negative electrode active material layer, the negative electrode active material layer has a negative electrode winding ending end and a negative electrode winding starting end, and the electrochemical device satisfies at least one of the following conditions:

(1) along a winding direction of the wound electrode assembly, the negative electrode winding ending end extends beyond the positive electrode winding ending end; or
(2) along a direction opposite the winding direction of the wound electrode assembly, the negative electrode winding starting end extends beyond the positive electrode winding starting end.

6. The electrochemical device according to claim 5, wherein the electrochemical device satisfies at least one of the following conditions:

(1) along the winding direction of the wound electrode assembly, a length by which the negative electrode winding ending end extends beyond the positive electrode winding ending end is greater than or equal to 1mm; or
(2) along the direction opposite the winding direction of the wound electrode assembly, a length by which the negative electrode winding starting end extends beyond the positive electrode winding starting end is greater than or equal to 1mm.

7. The electrochemical device according to claim 1, wherein an outermost circle electrode plate of the wound electrode assembly, and/or an innermost circle electrode plate of the wound electrode assembly is the negative electrode plate.

8. The electrochemical device according to claim 1, wherein the housing comprises a cover, a side wall, and a bottom wall, the side wall being cylindrical, and the electrochemical device satisfies at least one of the following conditions:

(1) the electrochemical device further comprises an electrode terminal and a positive electrode current collecting member, the wound electrode assembly comprises a positive electrode tab, and the electrode terminal is disposed on the cover and is electrically connected to the positive electrode tab through the positive electrode current collecting member; or
(2) the electrochemical device further comprises a negative electrode current collecting member, the wound electrode assembly comprises a negative electrode tab, and the bottom wall is electrically connected to the negative electrode tab through the negative electrode current collecting member.

9. The electrochemical device according to claim 1, wherein the housing comprises a cover, a side wall, and a bottom wall, the side wall being cylindrical, and the electrochemical device satisfies at least one of the following conditions:

(1) the electrochemical device further comprises an electrode terminal and a positive electrode current collecting member, the positive electrode plate further comprises a positive electrode current collector, and the positive electrode current collector comprises a positive electrode coating region and a positive electrode tab region, the positive electrode tab region being located at one end in a width direction of the positive electrode current collector; wherein the positive electrode active material layer is disposed on a surface of the positive electrode coating region, the positive electrode tab region is bent toward the winding centerline to form a first end surface of the wound electrode assembly, and the electrode terminal is disposed on the cover and is electrically connected to the first end surface through the positive electrode current collecting member; or
(2) the electrochemical device further comprises a negative electrode current collecting member, the negative electrode plate comprises a negative electrode active material layer and a negative electrode current collector, and the negative electrode current collector comprises a negative electrode coating region and a negative electrode tab region, the negative electrode tab region being located at one end in a width direction of the negative electrode current collector; wherein the negative electrode active material layer is disposed on a surface of the negative electrode coating region, the negative electrode tab region is bent toward the winding centerline to form a second end surface of the wound electrode assembly, and the bottom wall is electrically connected to the second end surface through the negative electrode current collecting member.

10. An electric device, comprising the electrochemical device according to any one of claims 1 to 9.

FIG. 1

FIG. 2

FIG. 3

FIG. 4

FIG. 5

FIG. 6

100

40

11

50

24

2122(2123)

2221(2121)

10

2222(2223)

121

12

13

60

FIG. 7

FIG. 8

FIG. 9

## INTERNATIONAL SEARCH REPORT

| International application No. |
|---|
| **PCT/CN2022/115878** |

| **A.** | **CLASSIFICATION OF SUBJECT MATTER** |
|---|---|

H01M 10/052(2010.01)i; H01M 10/058(2010.01)i

According to International Patent Classification (IPC) or to both national classification and IPC

| **B.** | **FIELDS SEARCHED** |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 电池, 卷绕, 壳, 中心, 正交, 垂直, 起始, 初始, 收尾, 尾端, 末端, 零角, 锐角, 膨胀, 塌陷, 内圈, 直径, 寿命, cell?, batter+, winding, shell?, center, orthogonal, vertical, start, initial, end, zero W angle, acute W angle, expansion, collapse, inner W circle, diameter, lifetime

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | CN 217158235 U (CONTEMPORARY AMPEREX TECHNOLOGY CO., LTD.) 09 August 2022 (2022-08-09)<br>      description, paragraphs 0004-0138, and figures 1-19 | 1-10 |
| A | CN 214706178 U (BYD CO., LTD.) 12 November 2021 (2021-11-12)<br>      entire document | 1-10 |
| A | CN 114420994 A (SPRINGPOWER TECHNOLOGY SHENZHEN CO., LTD.) 29 April 2022 (2022-04-29)<br>      entire document | 1-10 |
| A | CN 216450704 U (CONTEMPORARY AMPEREX TECHNOLOGY CO., LTD.) 06 May 2022 (2022-05-06)<br>      entire document | 1-10 |
| A | CN 208970673 U (SHENZHEN BAK POWER BATTERY CO., LTD.) 11 June 2019 (2019-06-11)<br>      entire document | 1-10 |
| A | JP 2020095835 A (TOYOTA MOTOR CORP.) 18 June 2020 (2020-06-18)<br>      entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 December 2022** | **20 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/115878**

| Patent document cited in search report | | | Publication date (day/month/year) | Patent family member(s) | | | Publication date (day/month/year) |
|---|---|---|---|---|---|---|---|
| CN | 217158235 | U | 09 August 2022 | None | | | |
| CN | 214706178 | U | 12 November 2021 | None | | | |
| CN | 114420994 | A | 29 April 2022 | CN | 217086651 | U | 29 July 2022 |
| CN | 216450704 | U | 06 May 2022 | None | | | |
| CN | 208970673 | U | 11 June 2019 | None | | | |
| JP | 2020095835 | A | 18 June 2020 | JP | 7153193 | B2 | 14 October 2022 |

Form PCT/ISA/210 (patent family annex) (January 2015)